# EUROPÄISCHE PATENTANMELDUNG

(11) **EP 1 445 052 A1**
(43) Veröffentlichungstag der Anmeldung: **11.08.2004**
(21) Anmeldenummer: 03002546.4
(22) Anmeldetag: 06.02.2003
(51) Int. Cl.: B23D 27/04, B23Q 9/00, B23C 3/12

(54) **Maschinelle Handvorrichtung zum Bearbeiten eines Werkstückrandes**

(71) Anmelder: Trumpf Grüsch AG, 7214 Grüsch (CH)
(72) Erfinder: Scherzinger, Bjoern, 78120 Furtwangen (DE); Böhringer, Claus, 7206 Igis (CH)
(74) Vertreter: KOHLER SCHMID + PARTNER

(57) **Zusammenfassung**

Eine maschinelle Handvorrichtung (1) zum Bearbeiten eines Werkstückrandes (9) weist eine Bearbeitungseinheit (2) sowie eine Vorschubeinheit (3) auf. Die Bearbeitungseinheit (2) ist mit einem motorisch angetriebenen Bearbeitungswerkzeug zum Bearbeiten des Werkstückrandes (9) und die Vorschubeinheit (3) mit einem motorischen Vorschubantrieb (13) versehen. Die Bearbeitungseinheit (2) ist mittels der durch den motorischen Vorschubantrieb (13) bewegten Vorschubeinheit (3) entlang dem Werkstückrand (9) in Vorschubrichtung (10) bewegbar.

## Beschreibung

Die Erfindung betrifft eine maschinelle Handvorrichtung zum Bearbeiten eines Werkstückrandes.

Derartige Vorrichtungen gehören in einer Vielzahl von Ausführungen zum Stand der Technik.

Aus DE 30 04 881 A1 ist eine als "Handnibbelmaschine" oder "Schweißkantenformer" bezeichnete Vorrichtung zum Abschrägen von Kanten an Werkstücken bekannt. Diese Vorrichtung ist manuell an dem zu bearbeitenden Werkstückrand entlang in Vorschubrichtung zu bewegen. Während der Bewegung in Vorschubrichtung bearbeitet die vorbekannte Maschine den Werkstückrand mittels eines quer zu der Vorschubrichtung oszillierenden Stoßstahles. Dabei wird der Werkstückrand mit einer Abschrägung versehen, die sich anschließend zur Herstellung einer Schweißverbindung nutzen lässt. Auch aufgrund des Eigengewichtes der vorbekannten Maschine erfordert deren Führung entlang dem zu bearbeitenden Werkstückrand einen verhältnismäßig großen Kraftaufwand.

Maschinelle Handvorrichtungen mit einem motorischen Vorschubantrieb sind in DE 31 51 102 A1 sowie in DE 296 06 725 U1 offenbart. Diese Druckschriften betreffen eine Hand-Brennschneidmaschine zur Erstellung von Schrägschnitten an Rohren (DE 31 51 102 A1) bzw. eine Falzschließmaschine zur Herstellung sogenannter Pittsburgh-Falze (DE 296 06 725 U1). In beiden Fällen sind der Vorschubantrieb sowie das zur Werkstückbearbeitung dienende Bearbeitungswerkzeug konstruktiv in eine gemeinsame Baueinheit integriert.

Ausgehend von dem Stand der Technik nach DE 30 04 881 A1 liegt der Erfindung die Aufgabe zugrunde, eine handhabungsfreundlichere Werkstückbearbeitung zu ermöglichen.

Erfindungsgemäß gelöst wird diese Aufgabe durch die maschinelle Handvorrichtung gemäß Patentanspruch 1. Hierbei handelt es sich um eine Vorrichtung mit modularem Aufbau. Für die Werkstückbearbeitung und zur Erzeugung der erforderlichen Vorschubbewegung sind jeweils für sich alleine funktionsfähige Baueinheiten vorgesehen. Die Vorschubeinheit übernimmt wenigstens teilweise die Bewegung des Bearbeitungswerkzeuges entlang dem zu bearbeitenden Werkstückrand. Der Vorrichtungsbediener wird dadurch erheblich entlastet; die Erzielung eines qualitativ hochwertigen Bearbeitungsergebnisses vereinfacht sich. Aufgrund der Trennung der Funktionen "Werkstückbearbeitung" und "Erzeugung der Vorschubbewegung" kann erfindungsgemäß von besonderen konstruktiven Maßnahmen zur baulichen Zusammenfassung der beiden genannten Funktionen abgesehen werden. Es ergibt sich überdies eine hohe Flexibilität bei der Wahl der genutzten Vorrichtungsfunktionen. So besteht die Möglichkeit, die Bearbeitungseinheit in entsprechenden Anwendungsfällen auch ohne Vorschubeinheit bzw. bei abgeschaltetem Vorschubantrieb einzusetzen, ohne auf die Möglichkeit des motorischen Vorschubantriebes in sonstigen Anwendungsfällen verzichten zu müssen. Bearbeitungseinheiten sind erfindungsgemäß in unterschiedlichster Bauart denkbar. So können etwa Schweißkantenformereinheiten mit oszillierenden Stoßstählen ebenso vorgesehen sein wie Kantenfräseinheiten.

Besondere Ausführungsarten der Erfindung nach Patentanspruch 1 ergeben sich aus den abhängigen Patentansprüchen 2 bis 11.

Gemäß Patentanspruch 2 ist in besonderer Ausgestaltung der Erfindung als Bearbeitungseinheit ein maschinelles Handwerkzeug herkömmlicher Bauart vorgesehen. Letzteres ist erfindungsgemäß mit einer angetrieben bewegbaren Vorschubeinheit verbunden. Diese Verbindung lässt sich mit konstruktiv einfachen Mitteln herstellen. Entsprechend erfordert die Ausrüstung des herkömmlichen Handwerkzeuges mit einem motorischen Vorschubantrieb einen lediglich geringen Konstruktionsaufwand. Vorhandene manuell geführte Handwerkzeuge können auf einfache Art und Weise auf motorischen Vorschub umgerüstet werden.

Grundsätzlich kann die Vorschubeinheit in Vorschubrichtung gesehen an beiden Seiten der Bearbeitungseinheit angeordnet sein. Erfindungsgemäß bevorzugt wird die in Patentanspruch 3 beschriebene Variante, dergemäß die Vorschubeinheit als "Zugmaschine" für die Bearbeitungseinheit dient.

Das kennzeichnende Merkmal von Patentanspruch 4 gestattet eine voneinander unabhängige Justierung der Bearbeitungseinheit und der Vorschubeinheit insbesondere gegenüber dem mittels der Bearbeitungseinheit zu bearbeitenden und die Vorschubeinheit bei deren Bewegung lagernden Werkstück.

Im Falle der Erfindungsbauart nach Patentanspruch 5 sind die Bearbeitungseinheit und die Vorschubeinheit in Vorschubrichtung mit gegenseitigem Spiel miteinander verbunden und gegen die Wirkung einer Rückstellkraft relativ zueinander auslenkbar. Das gegenseitige Spiel zwischen der Bearbeitungseinheit und der Vorschubeinheit gestattet es, Unterschiede in den Geschwindigkeiten zu kompensieren, mit denen sich die beiden genannten Einheiten der erfindungsgemäßen Handvorrichtung in Vorschubrichtung bewegen. Die wirksame Rückstellkraft sorgt dafür, dass die Bearbeitungseinheit und die Vorschubeinheit nach einer gegenseitigen Auslenkung unter Ausnutzung des in Vorschubrichtung bestehenden Spiels in dieser Richtung in ihre Ausgangslage zurücküberführt werden. In dieser Ausgangslage besteht dann wieder das ursprüngliche Spiel zwischen Bearbeitungseinheit und Vorschubeinheit in Vorschubrichtung. Im Sinne der Erfindung sind die in Patentanspruch 5 beschriebenen, ebenso wie die übrigen anmeldungsgemäßen Maßnahmen zur Kompensation von Geschwindigkeitsunterschieden auch an maschinellen Handvorrichtungen der vorstehenden Art vorgesehen, die eine Bearbeitungseinrichtung mit Bearbeitungswerkzeug und eine Vorschubeinrichtung mit Vorschubantrieb nicht in Form einer Bearbeitungseinheit und einer Vorschubeinheit, d.h. nicht in Form separater Module aufweisen.

Geschwindigkeitsunterschiede der genannten Art können durch irreguläre Betriebszustände, aber auch durch die Funktionsweise der erfindungsgemäßen Handvorrichtung bedingt sein. Den letztgenannten Fall betrifft die Erfindungsvariante gemäß Patentanspruch 6. Die Vorschubbewegung der Bearbeitungseinheit wird dabei infolge der Arbeitsweise des Bearbeitungswerkzeuges zeitlich begrenzt gehemmt bzw. blockiert. Aufgrund der in Patentanspruch 5 beschriebenen Maßnahmen zur Kompensation von Geschwindigkeitsunterschieden kann der Vorschubantrieb gleichwohl kontinuierlich, insbesondere mit konstanter Geschwindigkeit, betrieben werden.

Als besonders zweckmäßig hat sich das erfindungsgemäße Konzept im Falle maschineller Handvorrichtungen erwiesen, die - wie gemäß Patentanspruch 7 vorgesehen - als Bearbeitungseinheit einen Schweißkantenformer aufweisen. Dieser lässt sich, von der erfindungsgemäßen Vorschubeinheit angetrieben, handhabungsfreundlich an dem zu bearbeitenden Werkstückrand entlang bewegen. Die Unterschiede in den Geschwindigkeiten des Schweißkantenformers und der Vorschubeinheit, die durch die Arbeitsweise des an dem Schweißkantenformer vorgesehenen Bearbeitungswerkzeuges bedingt sind, können durch die vorstehenden Konstruktionsmerkmale kompensiert werden. Ein qualitativ hochwertiges Arbeitsergebnis ist folglich ungeachtet des handhabungsfreundlichen Vorrichtungsbetriebes gewährleistet.

Ausweislich Patentanspruch 8 wird die zwischen Bearbeitungseinheit und Vorschubeinheit wirksame Rückstellkraft im Interesse eines einfachen Aufbaus der Gesamtanordnung mittels wenigstens einer Rückstellfeder erzeugt.

Patentanspruch 9 betrifft eine Erfindungsbauart mit einer besonders funktionssicheren Vorschubeinheit.

Gemäß Patentanspruch 10 lässt sich die erfindungsgemäße Vorschubeinheit an unterschiedliche Dicken des zu bearbeitenden Werkstückes anpassen.

Eine Spannvorrichtung, wie sie gemäß Patentanspruch 11 in Weiterbildung der Erfindung vorgesehen ist, sorgt für eine sichere Anlage des oder der Antriebsorgane der Vorschubeinheit an dem Werkstück. Dieser Umstand ist insbesondere im Falle von Ausführungsformen der erfindungsgemäßen Handvorrichtung zweckmäßig, an denen die zuvor beschriebenen Maßnahmen zur Kompensation von Geschwindigkeitsunterschieden von Bearbeitungseinheit und Vorschubeinheit vorgesehen sind. In diesen Fällen sorgt die Spannvorrichtung dafür, dass die Vorschubeinheit unter der Wirkung der nach einer gegenseitigen Auslenkung von Bearbeitungseinheit und Vorschubeinheit auftretenden Rückstellkraft nicht entgegen ihrer ursprünglichen Bewegungsrichtung zu der Bearbeitungseinheit hin gezogen wird. Vielmehr wird die Vorschubeinheit in die Lage versetzt, auch beim Nachziehen der zuvor ausgelenkten Bearbeitungseinheit ihre Vorschubbewegung im Wesentlichen unverändert fortzusetzen.

Nachstehend wird die Erfindung anhand schematischer Darstellungen zu einem Ausführungsbeispiel näher erläutert. Es zeigen:
- Fig. 1: eine perspektivische Darstellung einer maschinellen Handvorrichtung mit Bearbeitungseinheit und Vorschubeinheit an einem ausschnittweise gezeigten Blech,
- Fig. 2: die Vorschubeinheit gemäß Fig. 1 in perspektivischer Draufsicht,
- Fig. 3: eine Teildarstellung der Vorschubeinheit gemäß Fig. 2 in perspektivischer stirnseitiger Ansicht,
- Fign. 4 und 5: die Vorschubeinheit gemäß den Fign. 1 bis 3 in unterschiedliche Betriebszustände betreffenden Teilansichten in Richtung des Pfeils IV/V in Fig. 1 und
- Fign. 6 und 7: die Vorschubeinheit gemäß den Fign. 1 bis 5 in der teilgeschnittenen Draufsicht bei unterschiedlichen Betriebszuständen.

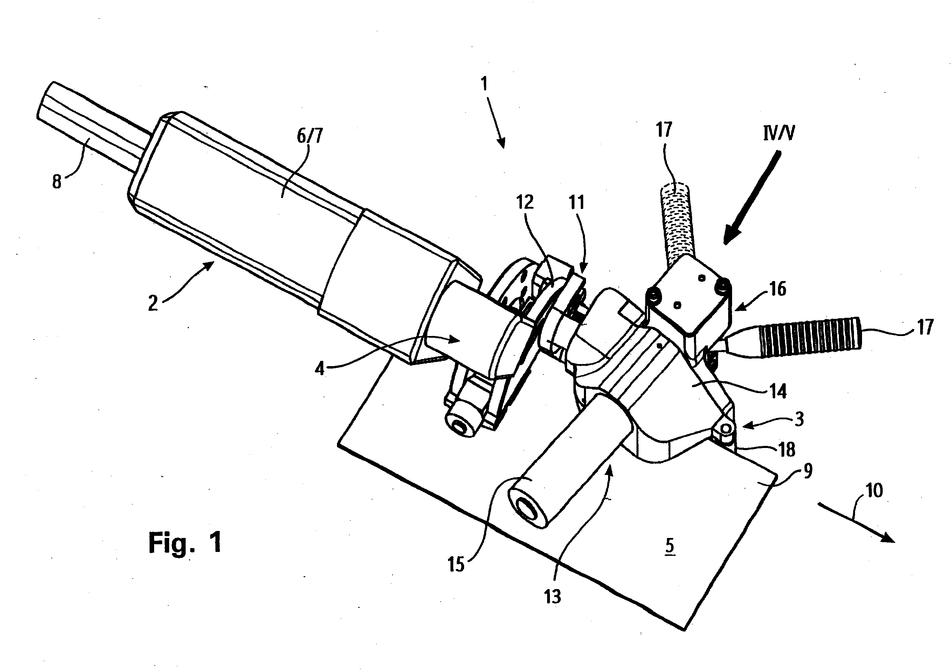

Ausweislich Fig. 1 besitzt eine maschinelle Handvorrichtung 1 einen modularen Aufbau mit einer Bearbeitungseinheit 2 sowie einer Vorschubeinheit 3. Die Bearbeitungseinheit 2 wird von einem maschinellen Handwerkzeug in Form eines herkömmlichen Schweißkantenformers gebildet, wie er beispielsweise in DE 30 04 881 A1 und in DE 295 14 965 U1 im Einzelnen beschrieben ist. Als Schweißkantenformer ist die Bearbeitungseinheit 2 mit einem Bearbeitungswerkzeug in Form eines nicht gezeigten Stoßstahls versehen. Dieser ist an einem Bearbeitungskopf 4 der Bearbeitungseinheit 2 untergebracht und oszilliert dort in einer Hubrichtung, die gegen die Ebene eines zu bearbeitenden Werkstücks in Form eines Bleches 5 geneigt ist. Angetrieben wird der Stoßstahl an dem Bearbeitungskopf 4 durch einen in einem Maschinengehäuse 6 angeordneten Elektromotor 7. Diesem wird über ein Kabel 8 die benötigte elektrische Energie zugeführt.

Zur Bearbeitung eines Werkstück- bzw. Blechrandes 9 ist die Bearbeitungseinheit 2 in einer durch einen Pfeil 10 veranschaulichten Vorschubrichtung an dem Blechrand 9 entlang zu bewegen. Im Laufe der Vorschubbewegung der Bearbeitungseinheit 2 trägt der Stoßstahl mit seiner Schneidkante bei jedem Arbeitshub eine Teillänge der dem Betrachter von Fig. 1 zugewandten oberen Längskante des Blechrandes 9 ab. In Vorschubrichtung 10 gesehen stimmt die Länge des Materialabtrages je Arbeitshub des Stoßstahles mit der entsprechenden Stoßstahlerstreckung überein. Befindet sich der Stoßstahl im Eingriff mit dem Blechrand 9, so liegt ihm in Vorschubrichtung 10 der noch abzutragende Teil der betreffenden Kante des Blechrandes 9 gegenüber und blockiert kurzfristig die weitere Bewegung des Stoßstahles und somit der gesamten Bearbeitungseinheit 2 in Vorschubrichtung 10. Diese Bewegung kann erst dann fortgesetzt werden, wenn der Stoßstahl bei seinem sich an jeden Arbeitshub anschließenden Rückhub oberhalb der abzutragenden Werkstückkante zu liegen kommt. Bei dieser Rückzugsstellung des Stoßstahls ist die Bearbeitungseinheit 2 in Vorschubrichtung 10 um eine Weglänge, die sogenannte "Schrittweite", zu bewegen, die zur Erstellung einer in Vorschubrichtung 10 zusammenhängenden Schrägfläche maximal der Länge des Stoßstahles bzw. der Stoßstahlschneidkante entsprechen darf. Insgesamt wird bei der Vorschubbewegung der Bearbeitungseinheit 2 längs des Blechrandes 9 eine Abschrägung erstellt, die nach der Bearbeitung des Blechs 5 zur Herstellung einer Schweißverbindung dient.

Zur Erzeugung der Vorschubbewegung der Bearbeitungseinheit 2 gegenüber dem Blech 5 dient die Vorschubeinheit 3. Diese ist über einen Kupplungsflansch 11 mit einer Wange 12 an dem Bearbeitungskopf 4 der Bearbeitungseinheit 2 verschraubt. Sie umfasst einen Vorschubantrieb 13 mit einem an ein Antriebsgehäuse 14 angeflanschten Elektromotor 15 als Antriebsmotor. Dieser ist über ein nicht gezeigtes Kabel an das Netz anzuschließen. Alternativ kann der Elektromotor 15 über die Bearbeitungseinheit 2 mit elektrischer Energie versorgt werden. Zur Fixierung der Vorschubeinheit 3 an dem Blech 5 dient eine Spannvorrichtung 16. Ein Spannhebel 17 der Spannvorrichtung 16 nimmt bei deren geöffnetem Zustand die in Fig. 1 mit ausgezogenen Linien gezeigte Stellung ein. In der dem geschlossenen Zustand der Spannvorrichtung 16 zugeordneten Position ist der Spannhebel 17 in Fig. 1 gestrichelt dargestellt. Eine an dem Antriebsgehäuse 14 gelagerte Stützrolle 18 ist in Fig. 1 teilweise erkennbar.

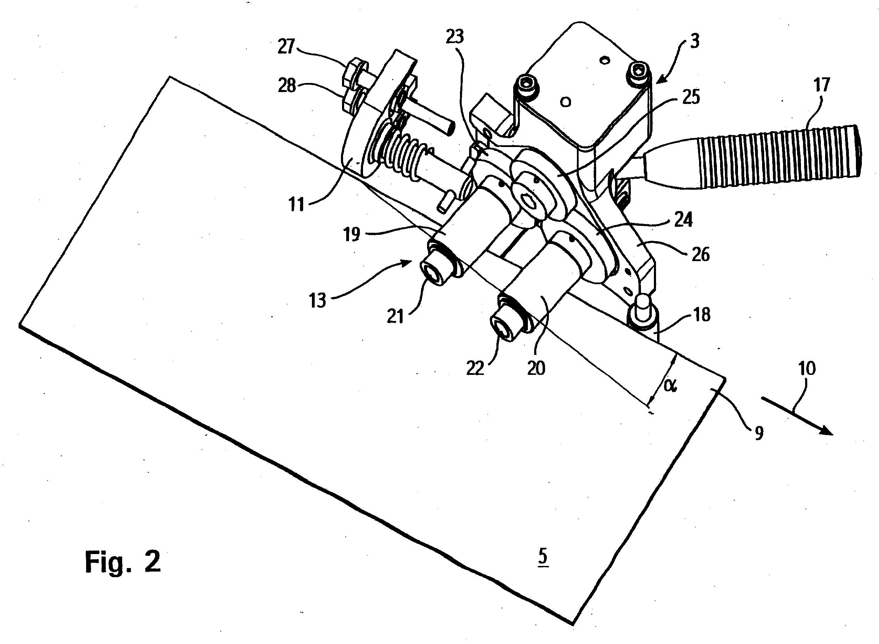

Fig. 2 zeigt die Vorschubeinheit 3 gemeinschaftlich mit dem Kupplungsflansch 11 sowie bei abgenommenem Antriebsgehäuse 14. Gemäß Fig. 2 sind im Inneren des Antriebsgehäuses 14 als Antriebsorgane des Vorschubantriebes 13 Antriebsrollen 19, 20 untergebracht. Diese sitzen auf Rollenachsen 21, 22. Der Antrieb der Antriebsrollen 19, 20 erfolgt über rollenseitige Antriebsräder 23, 24 sowie ein diese antreibendes motorseitiges Antriebsrad 25, das seinerseits auf der Welle des Elektromotors 15 aufsitzt. Zur Lagerung der Antriebsrollen 19, 20 sowie der rollenseitigen Antriebsräder 23, 24 und des motorseitigen Antriebsrades 25 dient eine Tragstruktur 26 der Vorschubeinheit 3.

Wie in Fig. 2 deutlich zu erkennen ist, sind die Antriebsrollen 19, 20 gegenüber dem Blechrand 9 unter einem Winkel α schräggestellt. Dies hat zur Folge, dass die Vorschubeinheit 3 im Betrieb gegen den Blechrand 9 beaufschlagt wird. Die Abstützung der Vorschubeinheit 3 an der Stirnfläche des Blechrandes 9 erfolgt dabei über die Stützrolle 18.

An dem Kupplungsflansch 11 sind in Fig. 2 Befestigungsschrauben 27, 28 erkennbar, mittels derer der Kupplungsflansch 11 und über diesen die Vorschubeinheit 3 mit der Bearbeitungseinheit 2 verbunden ist. Dabei durchsetzen die Befestigungsschrauben 27, 28 Langlöcher an dem Kupplungsflansch 11. Infolgedessen ist eine gegenseitige Justage von Bearbeitungseinheit 2 und Vorschubeinheit 3 bzw. eine voneinander unabhängige Ausrichtung von Bearbeitungseinheit 2 und Vorschubeinheit 3 gegenüber dem Blech 5 möglich.

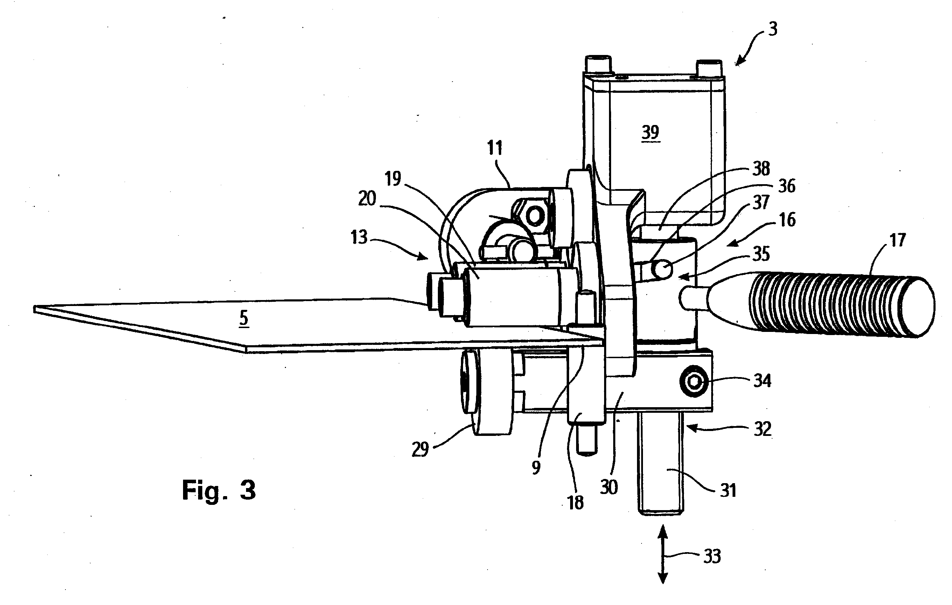

Gemäß Fig. 3 wird der Blechrand 9 von der Vorschubeinheit 3 umgriffen. Auf der Oberseite des Bleches 5 sind die Antriebsrollen 19, 20 des Vorschubantriebes 13 angeordnet. Diesen gegenüber liegt an der Unterseite des Bleches 5 als Gegenlager eine Gegenlagerrolle 29. Diese wird über einen Kragarm 30 an einer Stellspindel 31 einer Stellvorrichtung 32 gehalten. Durch Drehen der Stellspindel 31 um ihre Achse lässt sich der Kragarm 30 mit der Gegenlagerrolle 29 in Richtung eines Doppelpfeils 33 längs der Stellspindelachse zustellen. In der jeweils eingestellten Position wird der Kragarm 30 mittels einer Feststellschraube 34 gesichert.

In Fig. 3 ebenfalls zu erkennen ist eine Spannhülse 35 der Spannvorrichtung 16, in welche der Spannhebel 17 mit einem Gewindefortsatz eingeschraubt ist. In der Spannhülse 35 ausgespart ist ein Führungsschlitz 36, in welchen ein Führungsstift 37 eingreift. Letzterer ist an einem Zugstab 38 angebracht, der seinerseits im Innern der Spannhülse 35 verläuft und in das Innere eines Federgehäuses 39 ragt. Das Federgehäuse 39 ist an der Tragstruktur 26 der Vorschubeinheit 3 angebracht. Der Führungsschlitz 36 an der Spannhülse 35 verläuft in Umfangsrichtung der Spannhülse 35 und dabei gegen eine Radialebene des Zugstabes 38 geneigt.

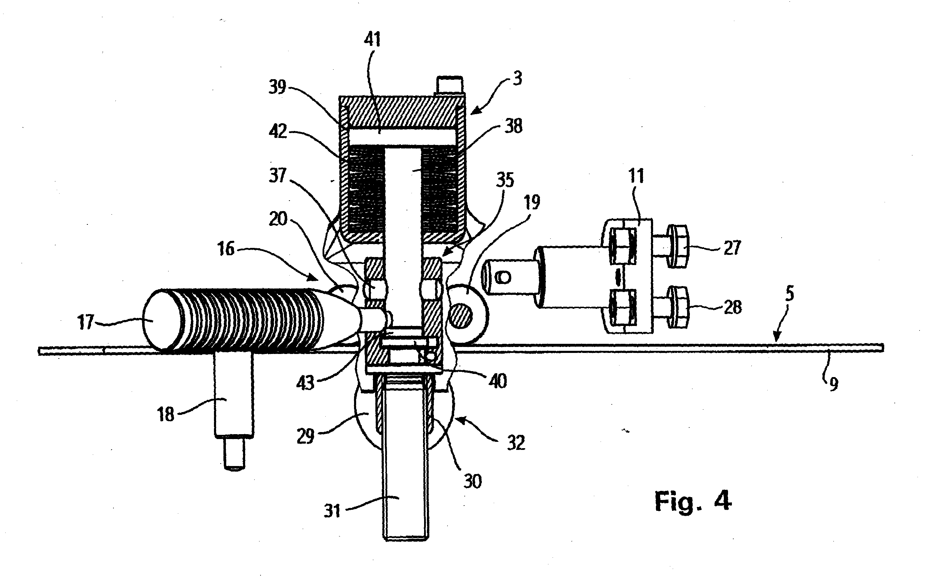

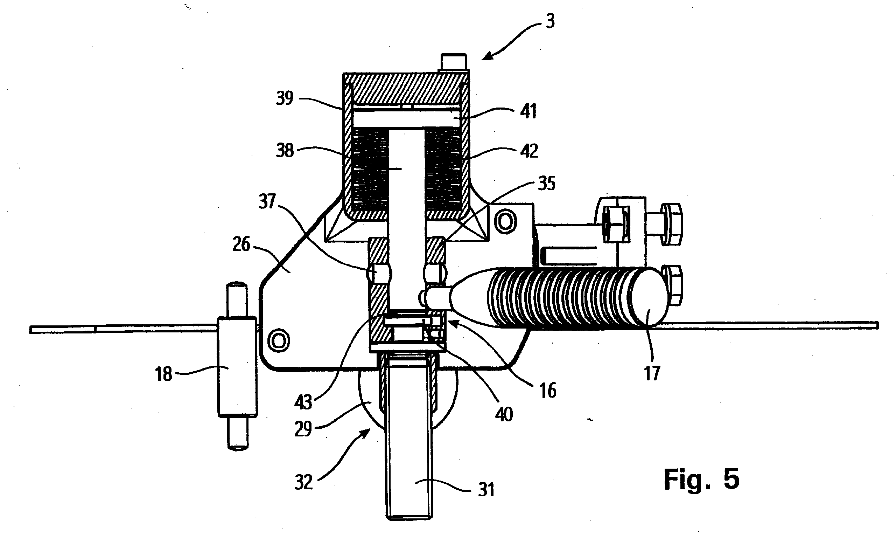

Details der Spannvorrichtung 16 sowie der Stellvorrichtung 32 sind den Fign. 4 und 5 zu entnehmen.

Demnach ist die Stellspindel 31 über einen Außenbund 40 an der Spannhülse 35 relativ zu dieser drehbar und in axialer Richtung ortsunveränderlich gelagert. Der mit der Gegenlagerrolle 29 versehene Kragarm 30 befindet sich an einem Innengewinde im Eingriff mit dem Außengewinde der Stellspindel 31. Der Führungsstift 37 durchsetzt den Zugstab 38 und ragt mit beiden gegenüber dem Zugstab 38 vorstehenden Enden in den Führungsschlitz 36 der Spannhülse 35. Der Zugstab 38 ist an dem im Innern des Federgehäuses 39 gelegenen Ende mit einer Basisplatte 41 versehen und über diese auf einem Tellerfederpaket 42 gelagert. Das Tellerfederpaket 42 stützt sich der Basisplatte 41 gegenüberliegend an dem Boden des Federgehäuses 39 ab. Der Zugstab 38 ist an seinem der Basisplatte 41 gegenüberliegenden Ende mit einem Zwischenraum 43 von der Stellspindel 31 bzw. von dem an deren Ende vorgesehenen Außenbund 40 beabstandet.

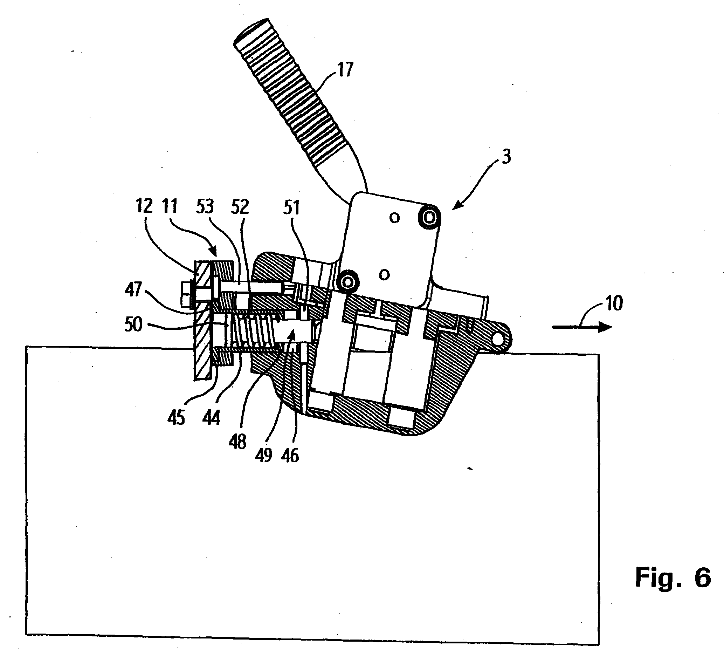

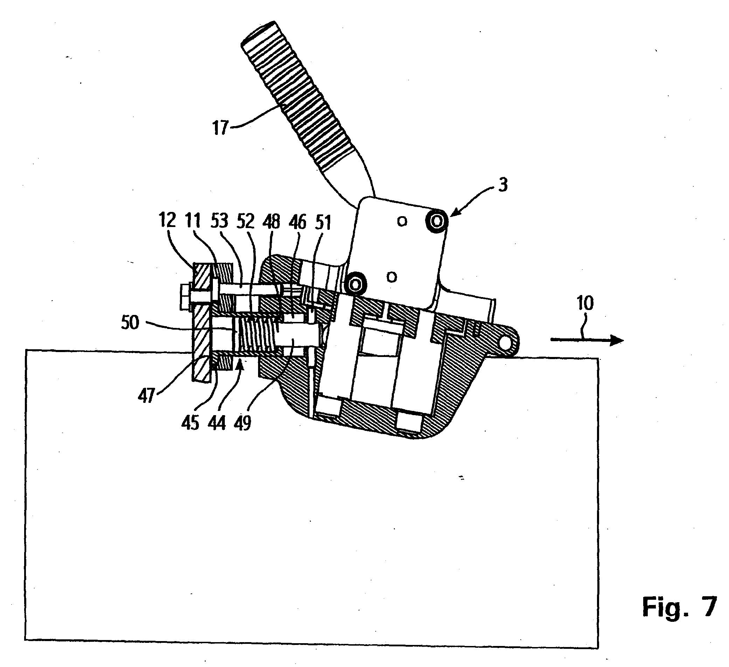

Die konstruktive Gestaltung der Verbindung zwischen der Vorschubeinheit 3 und der Bearbeitungseinheit 2 ist im Einzelnen den Fign. 6 und 7 zu entnehmen. Dabei wurde der Einfachheit halber von einer vollständigen Wiedergabe der Bearbeitungseinheit 2 abgesehen. Andeutungsweise dargestellt ist lediglich die Wange 12 des Bearbeitungskopfes 4, über welche die Bearbeitungseinheit 2 mit dem Kupplungsflansch 11 verschraubt wird.

Ausweislich der Fign. 6 und 7 ist der Kupplungsflansch 11 mit Spiel in Vorschubrichtung 10 an der Vorschubeinheit 3 gelagert. Ein Hohlzylinder 44 durchsetzt zu diesem Zweck eine abgestufte Bohrung 45 an dem Kupplungsflansch 11 und taucht in eine Führungsaufnahme 46 an der Vorschubeinheit 3 ein. Der Hohlzylinder 44 weist an seinem zu der Bearbeitungseinheit 2 hin liegenden Ende einen äußeren Stützrand 47 und an seinem zu der Vorschubeinheit 3 hin gelegenen Ende einen inneren Stützrand 48 auf. Im Innern des Hohlzylinders 44 ist ein Haltebolzen 49 untergebracht, der in Vorschubrichtung 10 verläuft und an einem axialen Ende einen Stützflansch 50 aufweist und diesem gegenüberliegend von einem Radialstift 51 durchsetzt wird. Der Radialstift 51 greift in eine entsprechende Aufnahme an der Vorschubeinheit 3 ein. Auf dem Haltebolzen 49 sitzt eine Rückstellfeder 52 auf, die einerseits an dem Stützflansch 50 des Haltebolzens 49 und andererseits an dem inneren Stützrand 48 des Hohlzylinders 44 abstützbar ist. Der Radialstift 51 fixiert den Haltebolzen 49 in Vorschubrichtung 10. Ein Drehsicherungsstift 53 verhindert ein Schwenken bzw. Drehen des Kupplungsflansches 11 sowie der daran vorgesehen Anbauteile um den Haltebolzen 49.

Soll mittels der maschinellen Handvorrichtung 1 an dem Blechrand 9 eine Schweißkante erstellt werden, so sind zunächst die Bearbeitungseinheit 2 und die Vorschubeinheit 3 auf die Dicke des Blechs 5 einzustellen. Zu diesem Zweck werden die Bearbeitungseinheit 2 und die Vorschubeinheit 3 bei ausgeschalteten Elektromotoren 7, 15 an dem Blech 5 angesetzt. In der aus DE 30 04 881 A1 zu entnehmenden Art und Weise wird die Bearbeitungseinheit 2, im Einzelnen deren Bearbeitungskopf 4, an die Dicke des Blechs 5 angepasst. An der Vorschubeinheit 3 wird die entsprechende Einstellung mittels der Stellvorrichtung 32 vorgenommen. Dabei wird die Stellspindel 31 bei gelöster Feststellschraube 34 gedreht, bis die Gegenlagerrolle 29 bei auf der Blechoberseite aufliegenden Antriebsrollen 19, 20 die Unterseite des Blechs 5 mit geringem Druck beaufschlagt.

Nach der Blechdickeneinstellung und der Einstellung weiterer Bearbeitungsparameter an der Bearbeitungseinheit 2 werden diese sowie die Vorschubeinheit 3 von dem Blech 5 abgenommen. Anschließend werden der Elektromotor 7 der Bearbeitungseinheit 2 und der Elektromotor 15 der Vorschubeinheit 3 eingeschaltet. Bei eingeschalteten Elektromotoren 7, 15 wird die Vorschubeinheit 3 an dem Blech 5 angesetzt. Da die Gegenlagerrolle 29 nahezu drucklos an der Blechunterseite anliegt, ergibt sich zwischen den Antriebsrollen 19, 20 des Vorschubantriebes 13 und dem Blech 5 ein lediglich geringer Kraftschluss. Auf die Bearbeitungseinheit 2 wird folglich eine lediglich geringe Vorschubkraft ausgeübt, sodass die Bearbeitungseinheit 2 nahezu unbeeinflusst durch die Vorschubeinheit 3 manuell gehandhabt werden kann. Diese Möglichkeit wird genutzt, um mittels der Bearbeitungseinheit 2 an dem Blech 5 bzw. dem Blechrand 9 die Schweißkante anzuschneiden.

Nach dem Anschnitt wird der Spannhebel 17 der Spannvorrichtung 16 manuell aus seiner in Fig. 1 mit ausgezogenen Linien dargestellten Position in die in der genannten Abbildung gestrichelte Stellung geschwenkt. Wie im Einzelnen den Fign. 4 und 5 entnommen werden kann, ist die Schwenkbewegung des Spannhebels 17 verbunden mit einem Schließen der Spannvorrichtung 16. Infolge des Zusammenwirkens des Führungsschlitzes 36 an der Spannhülse 35 und des Führungsstiftes 37 an dem Zugstab 38 verkleinert sich der Zwischenraum 43 zwischen dem in den Fign. 4 und 5 unteren Ende des Zugstabes 38 und dem diesem Zugstabende gegenüberliegenden Ende der Stellspindel 31. Die oberhalb und unterhalb des Bleches 5 liegenden Teile der Vorschubeinheit 3 werden durch Betätigung des Spannhebels 17 also gegeneinander bewegt; die Antriebsrollen 19, 20 einerseits und die Gegenlagerrolle 29 andererseits werden an dem Blech 5 gegeneinander verspannt. Infolgedessen ergibt sich ein ausgesprochen wirksamer Kraftschluss zwischen den Antriebsrollen 19, 20 und dem Blech 5.

Von der Vorschubeinheit 3 angetrieben, bewegt sich die Bearbeitungseinheit 2 nun an dem Blechrand 9 entlang. Von dem Bediener ist dabei lediglich auf eine funktionsgerechte Ausrichtung der Bearbeitungseinheit 2 gegenüber dem Blechrand 9 zu achten. Der Werkzeugvorschub wird ausschließlich mittels der Vorschubeinheit 3 bewerkstelligt. Die Vorschubgeschwindigkeit der Gesamtanordnung ist auf die Schrittweite der Bearbeitungseinheit 2 und an die Hubfrequenz des dort oszillierenden Stoßstahles abgestimmt. Sie ist an dem Vorschubantrieb 13 durch entsprechende Regelung des Elektromotors 15 einstellbar und wird so gewählt, dass die von dem Stoßstahl bei aufeinander folgenden Arbeitshüben an dem Blechrand 9 abgetrennten Kantenlängen geringfügig miteinander überlappen und sich somit längs des bearbeiteten Blechrandes 9 eine glattflächige Schweißkante ergibt.

Bedingt durch den intermittierenden Eingriff des Stoßstahles ergeben sich Unterschiede in den Geschwindigkeiten, mit denen sich die Bearbeitungseinheit 2 einerseits und die Vorschubeinheit 3 andererseits bei der Werkstückbearbeitung in Vorschubrichtung 10 bewegen. Immer dann, wenn der Stoßstahl mit einem Arbeitshub in den Blechrand 9 eingreift, ist die Bewegung der Bearbeitungseinheit 2 in Vorschubrichtung 10 blockiert. Gleichzeitig bewegt sich aber die Vorschubeinheit 3 kontinuierlich und mit konstanter Vorschubgeschwindigkeit. Kompensiert werden die auftretenden Geschwindigkeitsunterschiede durch die in den Fign. 6 und 7 im Einzelnen gezeigte Verbindung von Bearbeitungseinheit 2 und Vorschubeinheit 3.

Fig. 6 zeigt die Verbindung zwischen Bearbeitungseinheit 2 und Vorschubeinheit 3 im Umfang des Kupplungsflansches 11 sowie der Wange 12 des Bearbeitungskopfes 4 im Ausgangszustand, d.h. bei einheitlicher Geschwindigkeit von Bearbeitungseinheit 2 und Vorschubeinheit 3 in Vorschubrichtung 10. Wird nun die Vorschubbewegung der Bearbeitungseinheit 2 infolge eines Arbeitshubes des Stoßstahles blockiert, so entfernt sich die mit gleichbleibender Geschwindigkeit weiter bewegte Vorschubeinheit 3 von der Bearbeitungseinheit 2. Es ergeben sich dann die Verhältnisse gemäß Fig. 7. Die Einheit aus Wange 12 und Kupplungsflansch 11 ist nun von der Vorschubeinheit 3 weiter beabstandet als in dem Betriebszustand gemäß Fig. 6. Die Abstandsvergrößerung ist verbunden mit einem Spannen der Rückstellfeder 52. Die dabei in der Rückstellfeder 52 gespeicherte Energie wird frei, sobald der Stoßstahl der Bearbeitungseinheit 2 bei dem sich an den Arbeitshub anschließenden Rückhub eine Position oberhalb des zu bearbeitenden Blechrandes 9 erreicht und dadurch die Bearbeitungseinheit 2 zur Bewegung in Vorschubrichtung 10 freigibt. Dann sorgt die Rückstellfeder 52 für eine Wiederherstellung der Verhältnisse gemäß Fig. 6. Die Bearbeitungseinheit 2 wird von der Rückstellfeder 52 nachgezogen. Eine Bewegung der Vorschubeinheit 3 entgegen ihrer Antriebsrichtung wird durch den mittels der Spannvorrichtung 16 erzeugten besonderen Kraftschluss zwischen den Antriebsrollen 19, 20 und dem Blech 5 verhindert.

Aufgrund der Schrägstellung der Antriebsrollen 19, 20 gegenüber dem Blechrand 9 wird die Vorschubeinheit 3 während ihrer gesamten Bewegung über die Stützrolle 18 gegen den Blechrand 9 beaufschlagt. Dickenschwankungen an dem Blech 5 werden an der Vorschubeinheit 3 mittels des Tellerfederpaketes 42 ausgeglichen.

## Patentansprüche

1. Maschinelle Handvorrichtung zum Bearbeiten eines Werkstückrandes (9), **dadurch gekennzeichnet, dass** eine Bearbeitungseinheit (2), die ein motorisch angetriebenes Bearbeitungswerkzeug zum Bearbeiten des Werkstückrandes (9) umfasst, verbunden ist mit einer Vorschubeinheit (3), die einen motorischen Vorschubantrieb (13) aufweist, wobei die Bearbeitungseinheit (2) mittels der durch den motorischen Vorschubantrieb (13) bewegten Vorschubeinheit (3) entlang dem Werkstückrand (9) in Vorschubrichtung (10) bewegbar ist.

2. Maschinelle Handvorrichtung nach Anspruch 1, **dadurch gekennzeichnet, dass** als Bearbeitungseinheit (2) ein maschinelles Handwerkzeug herkömmlicher Bauart vorgesehen ist.

3. Maschinelle Handvorrichtung nach einem der vorhergehenden Ansprüche, **dadurch gekennzeichnet, dass** die Vorschubeinheit (3) der Bearbeitungseinheit (2) in Vorschubrichtung (10) vorauseilend angeordnet ist.

4. Maschinelle Handvorrichtung nach einem der vorhergehenden Ansprüche, **dadurch gekennzeichnet, dass** die Bearbeitungseinheit (2) und die Vorschubeinheit (3) relativ zueinander quer zu der Vorschubrichtung (10) einstellbar miteinander verbunden sind.

5. Maschinelle Handvorrichtung nach einem der vorhergehenden Ansprüche, **dadurch gekennzeichnet, dass** die Bearbeitungseinheit (2) und die Vorschubeinheit (3) in Vorschubrichtung (10) mit gegenseitigem Spiel miteinander verbunden und gegen die Wirkung einer Rückstellkraft relativ zueinander auslenkbar sind.

6. Maschinelle Handvorrichtung nach einem der vorhergehenden Ansprüche, **dadurch gekennzeichnet, dass** die Bearbeitungseinheit (2) ein Bearbeitungswerkzeug aufweist, welches zum Bearbeiten des Werkstückrandes (9) intermittierend und unter Hemmung, insbesondere Blockierung der Vorschubbewegung der Bearbeitungseinheit (2) an dem Werkstück (5) angreift und dass die Vorschubeinheit (3) mittels des Vorschubantriebes (13) kontinuierlich in Vorschubrichtung (10) bewegbar ist.

7. Maschinelle Handvorrichtung nach einem der vorhergehenden Ansprüche, **dadurch gekennzeichnet, dass** als Bearbeitungseinheit (2) ein Schweißkantenformer vorgesehen ist, mit einem Bearbeitungswerkzeug, welches intermittierend quer zu der Vorschubrichtung (10) in den Werkstückrand (9) eingreift.

8. Maschinelle Handvorrichtung nach einem der vorhergehenden Ansprüche, **dadurch gekennzeichnet, dass** die Bearbeitungseinheit (2) und die Vorschubeinheit (3) gegen die Wirkung wenigstens einer Rückstellfeder (52) in Vorschubrichtung (10) relativ zueinander auslenkbar sind.

9. Maschinelle Handvorrichtung nach einem der vorhergehenden Ansprüche, **dadurch gekennzeichnet, dass** die Vorschubeinheit (3) den Werkstückrand (9) umgreift und an wenigstens einer Seite des Werkstücks (5) mit zumindest einem Antriebsorgan (19, 20) des Vorschubantriebes (13) und an der gegenüberliegenden Seite des Werkstücks (5) mit zumindest einem dem Antriebsorgan (19, 20) zugeordneten Gegenlager (29) des Vorschubantriebes (13) angeordnet ist, wobei das Antriebsorgan (19, 20) durch den Antriebsmotor (15) der Vorschubeinheit (3) antreibbar und die Vorschubeinheit (3) unter Beaufschlagung des Werkstücks (5) durch das angetriebene Antriebsorgan (19, 20) sowie unter Abstützung durch das zugeordnete Gegenlager (29) an dem Werkstück (5) in Vorschubrichtung (10) bewegbar ist.

10. Maschinelle Handvorrichtung nach einem der vorhergehenden Ansprüche, **dadurch gekennzeichnet, dass** an der Vorschubeinheit (3) eine Stellvorrichtung (32) vorgesehen ist, mittels derer wenigstens ein Antriebsorgan (19, 20) und zumindest ein zugeordnetes Gegenlager (29) der Vorschubeinheit (3) unter Einstellung der Spaltweite eines zwischen dem Antriebsorgan (19, 20) und dem zugeordneten Gegenlager (29) zur Aufnahme des Werkstückrandes (9) ausgebildeten Antriebsspaltes in Richtung der Spaltweite relativ zueinander zustellbar sind.

11. Maschinelle Handvorrichtung nach einem der vorhergehenden Ansprüche, **dadurch gekennzeichnet, dass** an der Vorschubeinheit (3) eine Spannvorrichtung (16) vorgesehen ist, mittels derer wenigstens ein Antriebsorgan (19, 20) und zumindest ein zugeordnetes Gegenlager (29) der Vorschubeinheit (3) bei Anordnung an einander gegenüberliegenden Seiten des Werkstücks (5) und unter dessen beidseitiger Beaufschlagung quer zu der Vorschubrichtung (10) gegeneinander spannbar sind.
